# EUROPEAN PATENT APPLICATION

(11) **EP 4 851 836 A1**
(43) Date of publication of application: **09.12.2026**
(21) Application number: 25180636.0
(22) Date of filing: 04.06.2025
(51) Int. Cl.: G06F 21/44, H04L 9/00, G06F 21/62, H04L 9/32, H04L 9/40

(54) **SYSTEM AND METHOD FOR PROVIDING ACCESS TO AN INDUSTRIAL SYSTEM**

(71) Applicant: Siemens Aktiengesellschaft, 80333 München (DE)
(72) Inventor: Dimitrov, Dimitar, 80636 München (DE); K., Nallasivan, 560100 Banaglore (IN)
(74) Representative: Siemens Patent Attorneys

(57) **Abstract**

The invention relates to a system for providing access to an industrial system, comprising:
- an access management unit of the industrial system that is configured to issue a first verifiable credential to a factory operator system and to store a first verification information for said first verifiable credential in a trust unit,
- the trust unit that is configured to store and to provide verifiable credentials
- the factory operator system that is configured to issue a second verifiable credential for an industrial component, to sign the second verifiable credential with the first verifiable credential, and to store a second verification information for said second verifiable credential in the trust unit,
wherein the access management unit is further configured to verify the second verifiable credential based on the second verification information in the trust unit and to grant access to the industrial system for the industrial component depending on the verification result.

## Description

The present invention relates to a system and computer-implemented method for providing access to an industrial system, as well as a computer program product.

Authentication of industrial applications is important when establishing secure communication and functionality in an industrial environment. Industrial applications are usually authenticated based on certificates either self-assigned or issued by a central authority. However, a public key infrastructure (PKI) for example has disadvantages in a decentralized environment as it relies on central authority and participants have to maintain a PKI infrastructure as well. Furthermore, updating certificates for a plurality of decentralized, industrial devices can be complex and/or error prone.

It is therefore an objective of the present invention to improve the authentication of industrial assets.

The object is solved by the features of the independent claims. The dependent claims contain further developments of the invention.

The invention provides according to the first aspect a system for providing access to an industrial system, comprising:
- an access management unit of the industrial system that is configured to issue a first verifiable credential to a factory operator system and to store a first verification information for said first verifiable credential in a trust unit,
- the trust unit, that is configured to store and to provide verifiable credentials,
- the factory operator system that is configured to issue a second verifiable credential for an industrial component, to sign the second verifiable credential with the first verifiable credential, and to store a second verification information for the second verifiable credential in the trust unit,
wherein the access management unit is further configured to verify the second verifiable credential based on the second verification information in the trust unit and to grant access to the industrial system for the industrial component depending on the verification result.

The access management unit can be understood as an identity and access management (IAM) service.

The industrial component can be for example understood as an industrial asset, such as a (software) application.

It is an advantage of the proposed invention to provide a decentralized and self-sovereign way to authenticate industrial assets. Verifiable credentials enable authentication based on a decentralized technology. The approach is in particular beneficial in a decentralized ecosystem, because it ensures the trust over the trust system. Furthermore, it provides flexibility in a self-sovereign way, as the participating parties are in control of their identities without relying on a central authority. Furthermore, it adds the possibility of selective disclosure of parts of the credentials increasing privacy.

According to an embodiment of the invention, the trust unit may be a decentralized registry.

For example, the trust unit may be based on a decentralized distributed database, e.g., blockchain or decentralized identifiers (DID).

According to an alternative embodiment of the invention, the trust unit may be a centralized registry.

According to an embodiment of the invention, the industrial component may be an "Internet-of-Things" (IoT) gateway and it may be configured to forward further verifiable credentials issued by the factory operator system for additional industrial components to the access management service for verification.

According to an embodiment of the invention the second verifiable credential may be issued based on technical information of the industrial component, wherein the technical information comprises:
- type of industrial component,
- name,
- serial number,
- software version,
- date of manufacture,
- name of manufacturer,
- device family,
- App permission,
- role,
   and/or
- factory data.

According to an embodiment of the invention the access management unit may provide an access token to the industrial component if access is granted.

According to a second aspect the invention provides a computer-implemented method for providing access to an industrial system, comprising the steps:
- issuing a first verifiable credential for a factory operator system by an access management unit of the industrial system, wherein a first verification information for said first verifiable credential is stored in a trust unit,
- issuing a second verifiable credential for an industrial component by the factory operator system, wherein the second verifiable credential is signed with the first verifiable credential and wherein a second verification information for said second verifiable credential is stored in the trust unit,
- verifying the second verifiable credential by the access management unit based on the second verification information in the trust unit,
   and
- granting access to the industrial system for the industrial component depending on the verification result.

In addition, a computer program product (non-transitory computer readable storage medium having instructions, which when executed by a processor, perform actions) having program instructions for performing the aforementioned method.

The invention will be explained in more detail by reference to the accompanying figures.
- Fig. 1:: a first exemplary embodiment of a system for providing access to an industrial system; and
- Fig. 2:: a second exemplary embodiment of a system for providing access to an industrial system; and
- Fig. 3:: an exemplary embodiment of a computer-implemented method for providing access to an industrial system.

Equivalent parts in the different figures are labeled with the same reference signs.

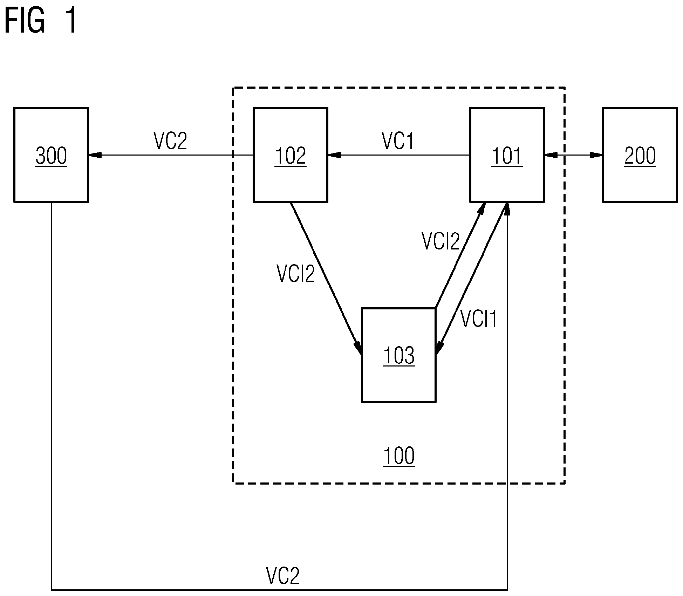

Figure 1 shows a first exemplary embodiment of a system 100 for providing access to an industrial system 200. The industrial system 200 may be for example an industrial cloud platform for providing industrial assets, e.g., SaaS applications.

The system 100 comprises an access management unit 101, a factory operator system 102, and a trust unit 103.

The access management unit 101 is assigned to the industrial system 200. In particular, the access management unit 101 is configured to manage access to the industrial system 200. The factory operator system 102 can for example request access to the industrial system 200.

The access management unit 101 is configured to issue a first verifiable credential VC1 to the factory operator system 102 and to store a first verification information VCI for this first verifiable credential VC1 in the trust unit 103. The first verification information VCI enables verification of the first verifiable credential. The access management unit 101 therefore has the role of issuer of verifiable credentials.

The trust unit 103 is configured to store and to provide verification information/material for verifying verifiable credentials. The trust unit 103 may be a decentralized registry, e.g., blockchain, or a centralized registry.

The factory operator system 102 may be assigned to a factory, requesting access to industrial assets of the industrial system 200. The factory operator system 102 is configured to issue a second verifiable credential VC2 for an industrial component 300, such as an software application 300 that may be related to the factory operation. The factory operator system 102 signs, e.g. cryptographically signs, the second verifiable credential VC2 with the first verifiable credential VC1 and stores a second verification information VCI2, that is related to the second verifiable credential VC2, in the trust unit 103.

Therefore, the factory operator system 102 serves as issuer and holder of verifiable credentials.

The second verifiable credential VC2 is issued based on technical information of the industrial component 300, wherein the technical information comprises:
- type of industrial component,
- name,
- serial number,
- software version,
- date of manufacture,
- name of manufacturer,
- device family,
- app permission,
- role,
   and/or
- factory data.

For example, the industrial component 300 may be a software application/app, wherein the second verifiable credential VC2 may comprise information on the app role and/or software version. In another example, the industrial component 300 is a device, wherein the second verifiable credential VC2 may comprise the serial number of the device, the date and name of manufacture and/or further factory specific data. In that way, the verifiable credential for the industrial asset can be customized.

The access management unit 101 is further configured to verify the second verifiable credential VC2 based on the second verification information VCI2. To this end, the industrial component 300, when requesting access to the industrial system 200, can present the second verifiable credential VC2 to the access management unit 101. The access management unit 101 can then retrieve the second verification information VCI2 from the trust unit 103 and verify the second verifiable credential VC2. Depending on the verification result, the access management unit 101 grants or denies access to the industrial system 200 for the industrial component 300. The access management unit 101 provides an access token to the industrial component 300 if access is granted.

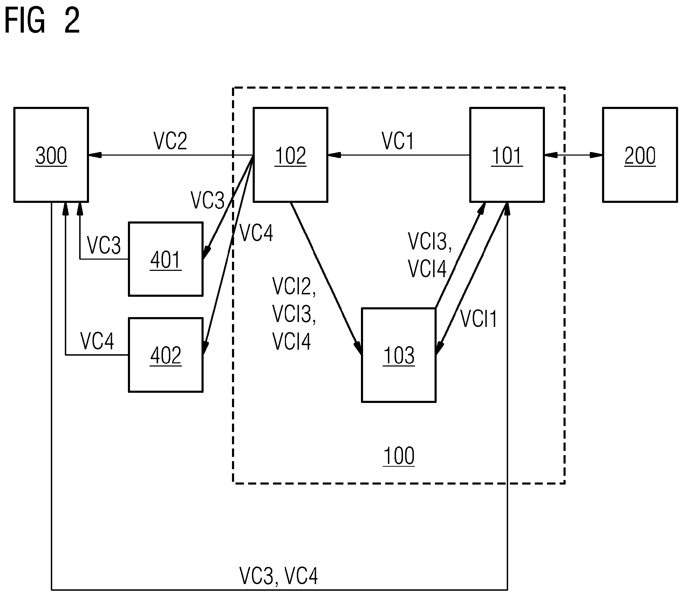

Figure 2 shows a second example of a system 100 for providing access to an industrial system 200.

The system 100 comprises an access management unit 101, a factory operator system 102, and a trust unit 103.

For example, the factory operator system 102 operates a factory based on a plurality of industrial applications 401, 402 which require access to the industrial system 200, e.g., for software updates or other data access.

The access management unit 101 of the industrial system 200 issues a first verifiable credential VC1 for the factory operator system 102 and stores a respective first verification information VCI1 for the first verifiable credential VC1 in the trust unit 103.

The factory operator system 102 can issue verifiable credentials VC2, VC3, VC4 for the industrial components 300, 401, 402, respectively, and store the respective verification information VCI2, VCI3, VCI4 in the trust unit 103. The verifiable credentials VC2, VC3, VC4 issued by the factory operator system 102 are signed using the first verifiable credential VC1.

For example, the factory operator system 102 can issue a second verifiable credential VC2 to an loT gateway 300. Furthermore, the factory operator system 102 can issue verifiable credentials VC3, VC4 to software applications 401, 402, respectively. The loT gateway 300 is for example configured to forward the verifiable credentials VC3, VC4 of the software applications 401, 402 to the access management service 101 for verification, if the software applications 401, 402 request access to the industrial system 200. The software applications 401, 402 may comprise wallets for securely storing the verifiable credentials VC3, VC4.

The factory operator system 102 therefore has the role of holder and issuer of verifiable credentials. After registration with the access management unit 101 of the industrial system 200, the factory operator system 102 retrieves its verifiable credential VC1 and can issue further verifiable credentials VC2, VC3, VC4 and signing them with its own verifiable credential. In that way, a chain of trust is established.

The access management unit 101 is further configured to verify verifiable credentials using the respective verification information stored in the trust unit 103. For example, the access management unit 101 can verify the verifiable credential VC3 of a software application 401 using the respective verification information VCI3. After successful verification the management access unit 101 may provide access to the industrial system 200, e.g., by providing an access token.

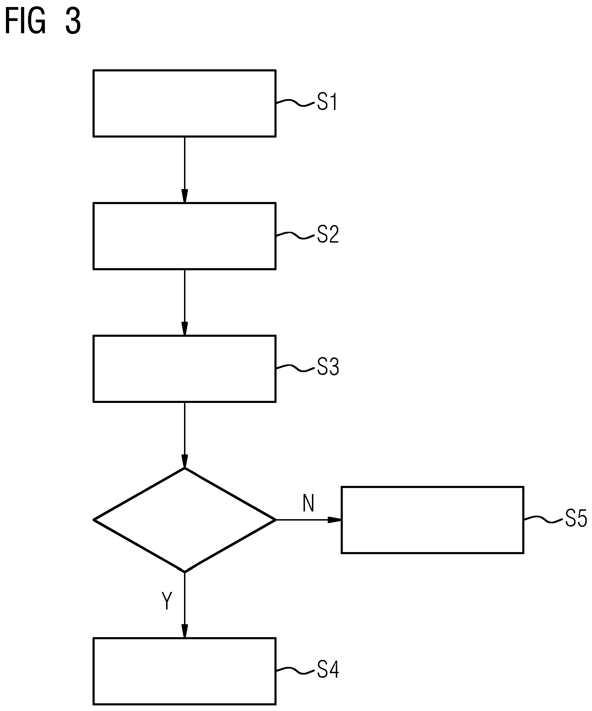

Figure 3 shows an example of a computer-implemented method for providing access to an industrial system.

The method comprises the following steps:
In a first step S1, a first verifiable credential for a factory operator system is issued by an access management unit of the industrial system, wherein a first verification information for said first verifiable credential is stored in a trust unit. In this step the access management unit 101 is issuer and the factory operator unit 102 is holder.

In a next step S2, a second verifiable credential for an industrial component is issued by the factory operator system, wherein the second verifiable credential is signed with the first verifiable credential by the factory operator system. In addition, the factory operator unit stores a second verification information for said second verifiable credential in the trust unit. In this step the factory operator system is issuer and may issue verifiable credentials to industry apps located in its factory. The verifiable credentials are signed with the first verifiable credential and in this way establishing a chain of trust.

In a next step S3, when the industrial component requests access to the industrial system, the second verifiable credential is verified by the access management unit based on the second verification information in the trust unit. To this end, the industrial component presents its verifiable credential to the access management unit and the verifiable credential is verified using the verification information stored in the trust unit.

In a next step S4, access is granted to the industrial system for the industrial component if the verification result is positive Y. If the verification result is negative N, access to the industrial system is denied, step S5.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (100) for providing access to an industrial system (200), comprising:
- an access management unit (101) of the industrial system (200) that is configured to issue a first verifiable credential (VC1) to a factory operator system (102) and to store a first verification information (VCI1) for said first verifiable credential (VC1) in a trust unit (103),
- the trust unit (103) that is configured to store and to provide verifiable credentials,
- the factory operator system (102) that is configured to issue a second verifiable credential (VC2) for an industrial component (300), to sign the second verifiable credential with the first verifiable credential, and to store a second verification information (VCI2) for the second verifiable credential (VC2) in the trust unit (103),
wherein the access management unit (101) is further configured to verify the second verifiable credential (VC2) based on the second verification information (VCI2) in the trust unit and to grant access to the industrial system for the industrial component (300) depending on the verification result.

2. System according to claim 1, wherein the trust unit is a decentralized registry.

3. System according to claim 1, wherein the trust unit is a centralized registry.

4. System according to one of the preceding claims, wherein the industrial component (300) is an loT gateway and is configured to forward further verifiable credentials (VC3, VC4) issued by the factory operator system (102) for additional industrial components (401, 402) to the access management service (101) for verification.

5. System according to one of the preceding claims, wherein the second verifiable credential is issued based on technical information of the industrial component, wherein the technical information comprises:
- type of industrial component,
- name,
- serial number,
- software version,
- date of manufacture,
- name of manufacturer,
- device family,
- App permission,
- role,
and/or
- factory data.

6. System according to one of the preceding claims, wherein the access management unit provides an access token to the industrial component if access is granted.

7. Computer-implemented method for providing access to an industrial system, comprising the steps:
- issuing (S1) a first verifiable credential for a factory operator system by an access management unit of the industrial system, wherein a first verification information for said first verifiable credential is stored in a trust unit,
- issuing (S2) a second verifiable credential for an industrial component by the factory operator system, wherein the second verifiable credential is signed with the first verifiable credential and wherein a second verification information for said second verifiable credential is stored in the trust unit,
- verifying (S3) the second verifiable credential by the access management unit based on the second verification information in the trust unit,
and
- granting (S4) access to the industrial system for the industrial component depending on the verification result.

8. Computer program product directly loadable into the internal memory of a digital computer, comprising software code portions for performing the method steps of claim 7 when said computer program product is run on the computer.
